# EUROPEAN PATENT APPLICATION

(11) **EP 4 644 220 A1**
(43) Date of publication of application: **05.11.2025**
(21) Application number: 24174074.5
(22) Date of filing: 03.05.2024
(51) Int. Cl.: B62K 21/12, B62K 21/16

(54) **BICYCLE ATTACHMENT DEVICE**

(71) Applicant: Torregrosa Gran, Marcos, 46183 La Eliana Valencia (ES)
(72) Inventor: Torregrosa Gran, Marcos, 46183 La Eliana Valencia (ES)
(74) Representative: Sánchez Paulino, Francisco Javier

(57) **Abstract**

Bicycle attachment device that improves the cyclist's experience by providing support for the user's forearms, allowing them to maintain an aerodynamic and comfortable posture. The device consists of a plate (1) that is attached to the handlebars (2) of the bicycle (3) which includes brackets (4) for a frame (5) on which the user's forearms can rest, providing additional support and allowing for an ergonomic and comfortable posture during cycling. The frame (5) includes at least one handle (7), which allows the user to maintain a firm grip.

## Description

### PURPOSE OF THE INVENTION

The purpose of this invention is, as the title indicates, a device that can be attached to bicycles to reduce aerodynamic drag and provide greater comfort and stability for the rider whilst cycling. This is an innovation that, within the current techniques, provides advantages that were unknown until now.

This invention is characterised by the special functional and structural features of the elements that make up the device. They all work together to create a bicycle attachment device designed to enhance the cycling experience. This device offers comfort and stability during cycling, while at the same time reducing aerodynamic resistance thanks to its ergonomic design and special features.

### TECHNOLOGY SECTOR

Therefore, this invention falls within the field of cycling devices.

### BACKGROUND OF THE INVENTION

Bicycles are an increasingly popular means of transportation in cities, as well as a popular form of exercise and recreation. However, the importance of maintaining good posture and improving aerodynamic resistance when cycling is often overlooked. These two aspects are essential for improving performance, preventing injuries and enjoying a more comfortable and efficient cycling experience.

Aerodynamic drag is a crucial factor to consider when riding a bicycle. Air resistance can account for up to 90% of the total resistance a cyclist experiences when pedalling at high speed. Therefore, improving aerodynamic drag can have a significant impact on the speed and effort required for cycling.

To reduce aerodynamic drag, it is important to adopt a more aerodynamic position on the bicycle. This includes reducing the frontal profile, minimising wind exposure and optimising body shape to reduce drag. In addition, the use of tight-fitting clothing and aerodynamic helmets can contribute to improving a cyclist's aerodynamics.

Improving posture and aerodynamic resistance while cycling not only benefits athletic performance, but also contributes to a more comfortable and safer cycling experience. Proper posture reduces the risk of injury and discomfort, while lower aerodynamic drag allows for increased speed with less effort.

Regarding the present state of technology, it is important to note that, although various designs for bicycle devices exist, none possess identical or similar structural and technical characteristics to those featured in the invention described in this document.

### EXPLANATION OF THE INVENTION

The invention is a bicycle attachment device, a tool designed to provide comfort and stability to the user while cycling. This device is designed to improve cyclists' experience, providing comfort and stability while cycling. Its ergonomic design and adjustable features make it a versatile tool that can be adapted to each user's individual needs.

Specifically, what the invention proposes, as stated above, is a bicycle attachment device consisting of a plate, which is attached to the handlebars of the bicycle, thus guaranteeing a firm and secure grip. The plate consists of brackets to which a frame with a surface specially designed to support the user's forearms is attached. This feature provides additional support, allowing the rider to maintain an ergonomic, aerodynamic and comfortable posture while cycling.

In addition, the frame of the device includes at least one handle, allowing the user to maintain a firm grip during use. The handle can be positioned relative to the frame, offering greater comfort and adaptability. It also includes an anti-slip coating that provides a more secure grip. On the top of the handle are openings specifically designed to accommodate gear shifting devices, allowing for greater use versatility.

The joint between the plate and the brackets is essential to ensure the stability and functionality of the device. This joint is made by means of attachable wedges that allow different degrees of inclination, which in turn provides greater flexibility and comfort when using the product.

In addition, the joint between the brackets and the frame is adjustable, allowing the flexibility to position the frame further forwards or backwards with respect to the brackets. This feature means that the device can be adapted to different needs and preferences, providing greater comfort and efficiency when being used.

Importantly, the versatility of the joints not only enhances user experience, but it also increases the efficiency of the product by adapting to different environments and usage situations. The ability to adjust the tilt and frame position allows for greater ergonomics, resulting in less fatigue and improved performance.

The bicycle attachment device includes at least one holder specially designed to provide maximum security and stability for electronic devices. This holder fits a wide range of electronic devices, including mobile phones, GPS's, music players and other similar devices. This ensures that users can safely and conveniently use their electronic devices while on the move.

The bicycle attachment device features a series of strategically placed housings, which are specifically designed to contain and guide the bicycle's cables efficiently, without interfering with its movement or operation.

These housings are carefully distributed at key points on the device, ensuring that the cables are protected from possible damage caused by friction, shocks or external elements. This ensures that the components of the bicycle function properly and are maintained in optimum condition.

In addition, the bicycle attachment device not only protects cables, but it also helps to keep the bicycle looking neat and tidy. Because they are properly guided and protected, cables do not protrude or become entangled, therefore creating a more aesthetic and professional appearance.

The surface design of the device may vary depending on the overall design. In some cases, this surface may include at least one padded overlay that is specifically designed to provide comfort and cushioning to the user's forearms. This padded overlay provides ergonomic support, reducing pressure and impact on this area of the body during use.

In addition, it is important to note that the cushioned overlay can be made of high-quality, soft-feel materials, while offering strength and durability. This ensures that the user will enjoy a comfortable and safe experience when using the device.

Unless otherwise specified, all technical and scientific terms used in this document carry their customary meaning as understood by a person skilled in the relevant field of this invention. When designing this invention, processes and materials similar or equivalent to those described may be used.

### BRIEF DESCRIPTION OF THE DRAWINGS

For the sake of completeness and to enhance comprehension of the invention's features within this description, integral and accompanying figures have been included. These drawings serve an illustrative, non-limiting purpose, as visual aids to the previously described characteristics.

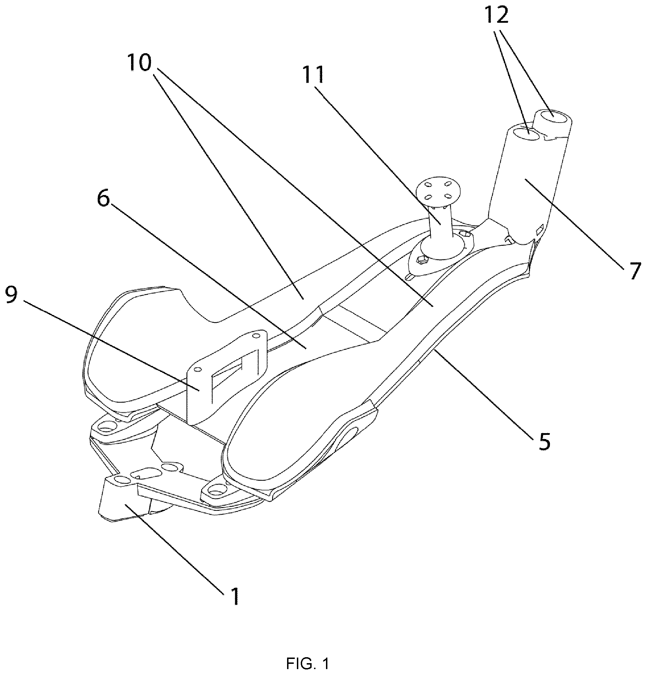

Figure 1 is a perspective representation of the bicycle attachment device.

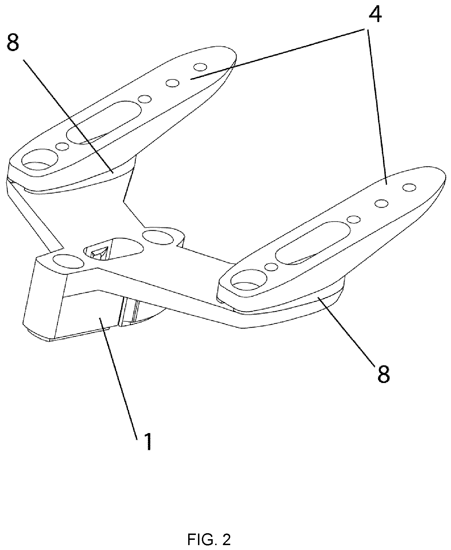

Figure 2 is a perspective view of the plate (1) in a fork-shaped design.

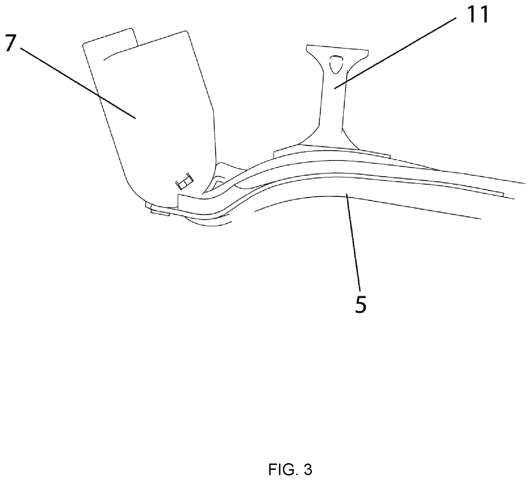

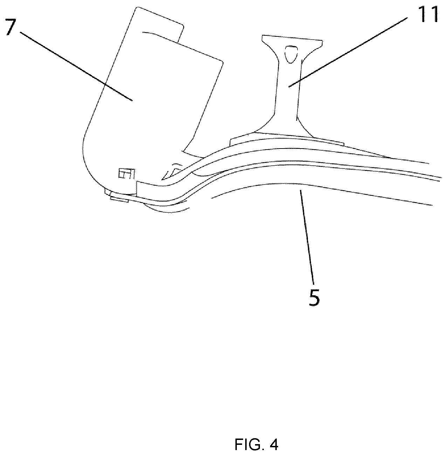

Figures 3 and 4 are lateral representations of the handle (7) with different inclinations.

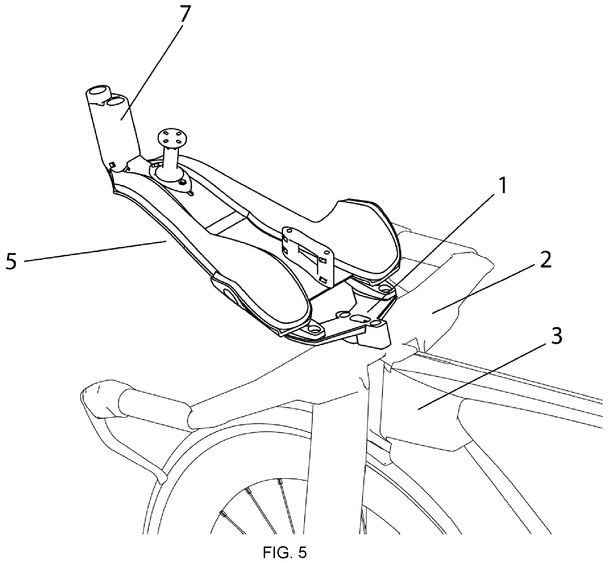

Figure 5 is a perspective representation of the bicycle attachment device set up on a bicycle (3)

### PREFERRED DESIGN OF THE INVENTION

Based on the illustrations, an outline of a preferred design for the invention follows: a bicycle attachment aimed at enhancing user comfort and stability during cycling. This is the optimal version, but it may be modified.

As can be seen in the figures, the bicycle attachment device consists of a plate (1) which is fixed to the handlebars (2) of the bicycle (3), thereby guaranteeing a firm and secure grip. The plate (1) consists of brackets (4) to which a frame (5) with a surface (6) specially designed to support the user's forearms is attached. This feature provides additional support, allowing the cyclist to maintain an ergonomic and comfortable posture while cycling.

In one design, the plate (1) is shaped like a fork, the central shaft of which is attached to the handlebar (2), and at the forked ends, the plate (1) is fitted with brackets (4). In another design, the plate (1) is made up of two separate elements fixed to the handlebar (2) comprising the brackets (4).

In addition, the frame (5) of the device includes at least one handle (7), which allows the user to maintain a firm grip while using the device. The handle can be positioned in relation to the frame (5), offering greater comfort and adaptability during use. The handle (7) also includes an anti-slip coating that provides a more secure grip. On the top of the handle are openings (12) specifically designed to accommodate gear shifting devices, allowing for greater use versatility.

Additionally, the joint between the plate (1) and the brackets (4) is made by means of attachable wedges (8) that enable different degrees of inclination, which provides greater flexibility and comfort when using the product. In addition, the joint between the brackets (4) and the frame (5) is adjustable, allowing the flexibility to position the frame (5) further forwards or backwards with respect to the brackets (4). This feature means that the device can be adapted to different needs and preferences, providing greater comfort and efficiency when being used.

The bicycle attachment device features a series of housings, specifically intended to accommodate the bicycle's cables, protecting and guiding them efficiently in a way that doesn't interfere with the movement or operation of the bicycle. These housings are strategically located at key points on the bicycle attachment device, ensuring that the cables are protected from possible damage caused by friction, shocks or external elements.

The frame (5) also features a holder (9) to store drinks containers in a safe and stable manner.

The surface (6) design may vary depending on the product design and may comprise at least one padded overlay (10) that is specifically designed to provide comfort and cushioning to the user's forearms. This padded overlay (10) provides ergonomic support, reducing pressure and impact on this area of the body during use. The overlay (10) may be detachable from the surface (6).

The bicycle attachment device includes at least one holder (11) specially designed for securing various electronic devices while cycling.

After this thorough description of the nature and design of this invention, there is no need for any additional explanation for someone skilled in the field to grasp its scope and benefits. It is noted that, substantially, the invention may be designed in ways that differ in detail from the example provided, and it will still function as intended, provided that the fundamental principle of the invention is not altered, changed or modified.

## Claims

1. Bicycle attachment device, **characterised by** the fact that it consists of a plate (1) which is fixed to the handlebars (2) of the bicycle (3), comprising brackets (4) on which a frame (5) is fixed, comprising a surface (6) designed to support the user's forearms and whose plate (1) includes at least one handle (7), which allows the user to maintain a firm grip while using the device.

2. Bicycle attachment device, as described in the preceding claim, is **characterised by** its adjustable angle of inclination relative to the frame (5) of the handle (7).

3. Bicycle attachment device, according to any of the previous claims, **characterised by** the joint between the plate (1) and the brackets (4) made by means of attachable wedges (8), which allow for different degrees of inclination.

4. Bicycle attachment device, according to any of the preceding claims, **characterised by** the frame (5), consisting of a holder (9) for storing drinks containers.

5. Bicycle attachment device, according to any of the previous claims, **characterised by** the surface (6) consisting of at least one padded overlay (10) designed to provide cushioning for the user's forearms.

6. Bicycle attachment device, according to the preceding claim, **characterised by** an overlay (10) which is detachable from the surface (6).

7. Bicycle attachment device, according to any of the preceding claims, **characterised by** at least one holder (11) specially designed for securing various electronic devices.

8. Bicycle attachment device, according to any of the preceding claims, **characterised by** a forked plate (1), whose common stem is fixed to the handlebars (2) of the bicycle (3), and at the bifurcated ends, consists of brackets (4) on to which a frame (5) is fixed.

9. Bicycle attachment device, according to any one of claims 1 to 7, **characterised by** a plate (1) consisting of two separate elements fixed to the handlebars (2) comprising the brackets (4).

10. Bicycle attachment device, according to any of the preceding claims, **characterised by** a handle (7) with an anti-slip coating.

11. Bicycle attachment device, according to any of the preceding claims, **characterised by** a handle (7) which features, on its upper part, various openings (12) that will accommodate gear shifting devices.

12. Bicycle attachment device, according to any of the preceding claims, **characterised by** a joint between the brackets (4) and an adjustable frame (5), allowing the frame (5) to be positioned further forwards or backwards with respect to the brackets (4).

13. Bicycle attachment device, according to any one of the preceding claims, **characterised by** a series of housings specifically designed to accommodate bicycle component cables.
